# FASCICULE DE BREVET EUROPEEN

(11) **EP 4 705 817 B1**
(45) Date de publication et mention de la délivrance du brevet: **03.06.2026**
(21) Numéro de dépôt: 25724556.3
(22) Date de dépôt: 14.05.2025
(51) Int. Cl.: G02B 7/183, G02B 23/16

(54) **DISPOSITIF D'AJUSTEMENT PAR TRANSLATION DE LA POSITION D'UN COMPOSANT OPTIQUE D'UN ÉQUIPEMENT**
VORRICHTUNG ZUR TRANSLATORISCHEN VERSTELLUNG DER POSITION EINER OPTISCHEN KOMPONENTE EINER VORRICHTUNG
DEVICE FOR TRANSLATIONALLY ADJUSTING THE POSITION OF AN OPTICAL COMPONENT OF AN APPARATUS

(30) Priorité: 22.05.2024 FR 2405078
(43) Date de publication de la demande: 11.03.2026
(73) Titulaire: Airbus Defence and Space SAS, 31402 Toulouse Cedex 4 (FR)
(72) Inventeur: ESCANDE, Boris, 31402 TOULOUSE CEDEX 4 (FR); GUAY, Pascal, 31402 TOULOUSE CEDEX 4 (FR)
(74) Mandataire: Plasseraud IP
(86) Numéro de dépôt international: PCT/EP2025/063203
(87) Numéro de publication internationale: WO 2025/242505

(56) Documents cités:
- CA-A1- 2 018 387
- US-A- 4 500 170

## Description

### Domaine technique

La présente divulgation concerne un dispositif d'ajustement de la position d'un composant optique d'un équipement optique, en particulier d'un équipement optique, tel qu'un télescope, embarqué à bord d'un engin spatial.

### Technique antérieure

Il peut être nécessaire d'ajuster finement la position d'un capteur, d'une lentille, d'un miroir ou d'un prisme, par exemple pour régler le plan focal d'un télescope, notamment selon une translation, d'amplitude précise.

On connaît, de FR 3 021 122, un dispositif de compensation du déplacement d'une image dans le plan focal d'un système optique, notamment par déplacement de deux miroirs du système optique avec des structures en double X.

On connaît également, de EP 3 839 424, un télescope comportant un capteur d'image pouvant être déplacé par un élément de positionnement mobile pour ajuster la focale du télescope.

On connaît également , de US 4 500 170 A, un dispositif d'ajustement de la position axiale d'un réflecteur d'un télescope comprenant un support sur lequel est disposé le réflecteur, dont la position selon l'axe optique est ajustable au moyen d'un actionneur pourvu d'un moteur.

Certaines applications requièrent toutefois des performances supérieures, notamment en termes de précision, d'amplitude et de vitesse de déplacement.

### Résumé

La présente divulgation vient améliorer la situation grâce à un dispositif d'ajustement par translation de la position d'un composant optique d'un équipement optique, notamment d'un télescope embarqué dans un engin spatial, selon un axe central et relativement à un bâti, le dispositif comportant :
a. un support, sur lequel est disposé le composant optique, mobile en translation relativement au bâti,
b. un actionneur solidaire du bâti et configuré pour déplacer le support en translation, relativement au bâti, selon l'axe central, entre une position basse et une position haute,
c. un système de guidage latéral du support comportant deux ensembles de guidage disposés latéralement respectivement de part et d'autre du support et configurés pour guider, selon l'axe central, le support lors de son déplacement en translation,

chaque ensemble de guidage comportant un cadre et au moins deux étages disposés à des hauteurs différentes selon l'axe central, chaque étage comportant au moins trois éléments flexibles dont au moins un élément flexible central et deux éléments flexibles latéraux,
lesdits éléments flexibles latéraux et lesdits éléments flexibles centraux étant fixés aux cadres et dans chaque étage, l'ensemble desdits éléments flexibles latéraux et ledit élément flexible central étant fixés l'un au bâti et l'autre au support.

Ainsi, selon un exemple, au sein d'un étage d'un ensemble de guidage, ledit au moins un élément flexible central est fixé d'une part au cadre de l'ensemble de guidage et d'autre part au bâti et les éléments flexibles latéraux sont fixés d'une part au cadre de l'ensemble de guidage et d'autre part au support. Selon un autre exemple, au sein d'un étage d'un ensemble de guidage, les éléments flexibles latéraux sont fixés d'une part au cadre de l'ensemble de guidage et d'autre part au bâti et ledit au moins un élément flexible central est fixé d'une part au cadre de l'ensemble de guidage et d'autre part au support.

Avantageusement la présente invention permet de proposer un dispositif permettant de déplacer le composant optique d'un équipement tel qu'un télescope selon une translation dite pure. Par « translation pure », on entend une translation avec un déplacement latéral parasite inférieur à 1 µm, soit environ 1/2000 de la course totale, un déplacement angulaire inférieur à 500 µrad, c'est-à-dire plus ou moins 250 µrad par axe (X, Y) et éventuellement un cadencement (axe Z) inférieur à plus ou moins 10 µm. Un tel dispositif permet d'effectuer un déplacement avec un guidage précis du composant optique dans des applications où la stabilité de déplacement et l'absence de mouvements parasites sont clés pour la performance.

Avantageusement, la présente invention permet de proposer un tel dispositif contraint en masse, notamment de l'ordre de 1kg, et en volume, notamment avec un encombrement volumique inférieur à 10⁻² m³, notamment un encombrement inférieur à un parallélépipède de dimensions 180 mm x 180 mm x 300 mm.

Avantageusement la présente invention permet de proposer un tel dispositif qui soit robuste, capable de tenir des efforts importants provoqués par des chocs et des vibrations, notamment pour des applications spatiales dans lequel le dispositif fait l'objet d'un lancement dans l'espace. L'architecture du dispositif permet de tenir les efforts au lancement sans adjonction d'un système de gerbage.

Avantageusement la présente invention permet de proposer un dispositif permettant d'obtenir une translation rapide, c'est-à-dire de l'ordre de quelques secondes.

Avantageusement la présente invention permet de proposer un dispositif ayant une longue tenue dans le temps sans possibilité de maintenance.

Avantageusement, la présente invention permet de proposer un dispositif qui permette de déplacer le composant optique d'une course de quelques millimètres.

Les caractéristiques exposées dans les paragraphes suivants peuvent, optionnellement, être mises en œuvre, indépendamment les unes des autres ou en combinaison les unes avec les autres :

Les éléments flexibles peuvent être disposés, dans une position médiane, parallèlement entre eux et à une même hauteur au sein d'un même étage. La position médiane est une position intermédiaire entre la position basse et la position haute, notamment une position à équidistance de la position basse et de la position haute.

Le fait d'avoir deux étages de guidage à éléments flexibles permet de supporter la masse mobile constituée par le support et le composant optique, permet également de guider et stabiliser la masse mobile sans mouvements parasites.

Chaque élément flexible peut présenter deux extrémités, chaque élément flexible, latéral ou central, étant fixé au cadre par une de ses extrémités et par l'autre extrémité au bâti ou au support, notamment selon qu'il constitue un élément flexible central ou latéral.

Les éléments flexibles sont avantageusement des lames.

Dans ce cas, les lames peuvent être fabriquées à partir d'un feuillard, qui constitue notamment une tôle mince métallique ou en matériau composite. On découpe le feuillard aux dimensions souhaitées pour former la lame. Les lames ainsi formées peuvent être pincées avec des brides vissées aux extrémités de chaque lame et ainsi fixées aux cadres, au bâti ou au support.

En variante, les lames peuvent être fabriquées par usinage dans la masse, auquel cas chaque lame et ses brides constituent une seule pièce.

Les lames peuvent être disposées parallèlement entre elles, notamment dans la position médiane, la distance entre deux lames adjacentes étant inférieure ou égale à 10 mm, notamment inférieure ou égale à 5 mm. Les lames adjacentes le sont au sein d'un même étage d'un ensemble de guidage.

Chaque élément flexible peut présenter une épaisseur comprise entre 0,1 mm et 0,6 mm. Les éléments flexibles latéraux et centraux présentent de préférence la même longueur, au sein d'un même étage, et de préférence au sein d'un même ensemble de guidage, voire tous les éléments flexibles latéraux et centraux présentent la même longueur. Les éléments flexibles centraux peuvent présenter une largeur différente des éléments flexibles latéraux. Par exemple, les éléments flexibles latéraux peuvent présenter une largeur inférieure à celle des éléments flexibles centraux.

La raideur de l'ensemble des éléments flexibles latéraux est de préférence égale à la raideur de l'ensemble des éléments flexibles centraux. La longueur, la largeur et l'épaisseur des éléments flexibles peuvent être calculées pour permettre d'avoir une raideur prédéterminée, avec un encombrement réduit. En particulier, le double étage à éléments flexibles permet de tenir les performances dans un encombrement réduit, grâce aux éléments flexibles plus courts.

Les éléments flexibles comportent avantageusement au moins un matériau choisi dans le groupe constitué par un acier, un titane, un cuivre, leurs alliages et un matériau composite, notamment à base de carbone. Ce choix peut être notamment guidé par les performances et la raideur souhaités pour l'élément flexible.

Les cadres sont disposés de préférence parallèlement à l'axe central et parallèles entre eux. Cela signifie que les cadres sont parallèles à un plan médian contenant l'axe central.

Les deux ensembles de guidage peuvent être disposés de manière symétrique entre eux par rapport à un plan médian passant par l'axe central.

Les cadres et les éléments flexibles sont notamment configurés de telle sorte que, lorsque le support est déplacé en translation d'une distance a, chaque cadre est déplacé, dans la même direction, d'une distance a/2.

L'actionneur peut comporter un organe moteur ainsi qu'un arbre configuré pour être entraîné en rotation par l'organe moteur et présentant une excentrique. L'actionneur peut comporter une bielle comportant une extrémité supérieure articulée avec le support et une extrémité inférieure articulée avec l'excentrique.

Ainsi, dans ce cas, le mouvement de rotation de l'organe moteur entraîne *in fine* un mouvement de translation de l'extrémité supérieure de la bielle et donc un mouvement de translation du support, guidé par ailleurs par les deux ensembles de guidage. En effet, la transmission par bielle et excentrique permet de transformer la rotation en translation. De plus la transmission par bielle et excentrique permet d'offrir une position irréversible lorsque l'on est près du point mort, en fin de course, ce qui permet d'éviter d'ajouter un système de gerbage au lancement.

Toujours dans ce cas, le dispositif peut comporter une liaison pivot, notamment un roulement, entre une extrémité inférieure de la bielle et l'excentrique, et une liaison pivot, notamment un roulement, entre l'arbre et le bâti.

L'actionneur apporte le couple nécessaire à la création du mouvement du composant optique. Il donne une vitesse suffisante à ce dernier.

Le dispositif permettant de conduire à la refocalisation comporte dans ce cas le double étage de guidage par éléments flexibles, notamment lames, mais également la transmission par excentrique et bielle.

L'organe moteur comprend de préférence un moteur pas à pas et un réducteur. La résolution du dispositif est fonction de la taille du pas, dans ce cas.

La présence du double étage de guidage à éléments flexibles peut être suffisamment souple axialement pour ne pas avoir à surdimensionner l'organe moteur.

Le double étage de guidage par éléments flexibles avec un cadre déporté permet de fournir une course importante tout en limitant l'effort nécessaire à la flexion des éléments flexibles. La stabilité ainsi apportée à la masse mobile ne se fait pas au détriment de l'actionneur : il est ainsi possible d'utiliser un réducteur - ou motoréducteur - de dimension raisonnable, avec peu de réduction, et donc une vitesse en sortie importante, et un couple en sortie limité.

Les éléments flexibles latéraux sont, dans un exemple, fixés par une extrémité au cadre et par l'autre extrémité au bâti. Dans ce cas, chaque étage peut comporter un élément flexible central, lequel est fixé par une extrémité au cadre et par l'autre extrémité au support. Alternativement, dans ce cas, chaque étage peut comporter deux éléments flexibles centraux, disposés par exemple parallèlement entre eux, fixés chacun par une extrémité au cadre et par l'autre extrémité au support.

La partie du bâti qui est reliée à un élément flexible, latéral ou central, peut être disposée à côté de la partie du support qui est reliée à un élément flexible, central ou latéral. Ainsi, dans chaque ensemble de guidage, le cadre se trouve à distance de cette partie du bâti et de cette partie du support, étant séparé de celles-ci par les éléments flexibles.

Le bâti peut comporter, pour chaque ensemble de guidage, deux séparateurs séparant les étages entre eux. Le support peut présenter également une portion de séparation séparant les étages entre eux. Dans ce cas, la portion de séparation peut être disposée entre lesdits séparateurs du bâti et être apte à coulisser relativement au bâti, les séparateurs du bâti et la portion de séparation du support étant de préférence disposés parallèlement entre eux.

Une distance maximale de translation du support, obtenue notamment lorsque l'organe moteur entraîne en rotation l'arbre d'un demi-tour, peut être comprise entre 1 mm et 10 mm, notamment entre 1 mm et 5 mm, étant notamment égale à 3 mm.

La masse mobile, incluant la masse du support et celle du composant mobile, peut être comprise entre 0,3 kg et 2 kg, notamment entre 0,5 kg et 1,5 kg, notamment égale à environ 1 kg.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique, en coupe axiale, d'un exemple de dispositif d'ajustement.
[Fig. 2] montre schématiquement, en vue de dessus les ensembles de guidage et le support du dispositif de la figure 1.
[Fig. 3] montre schématiquement, en perspective et en coupe axiale, un exemple de dispositif d'ajustement.
[Fig. 4] montre schématiquement, en perspective, un exemple de dispositif d'ajustement.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures.

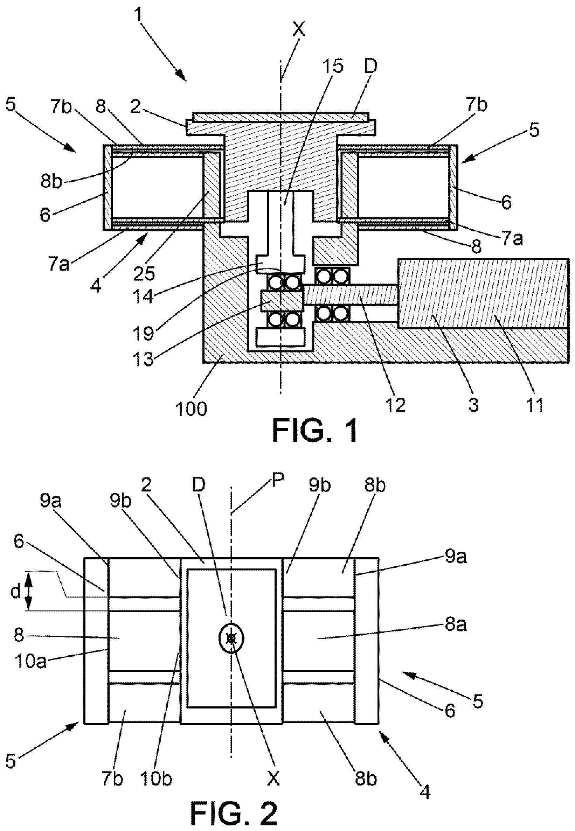

Il est maintenant fait référence aux figures 1 et 2. Celles-ci illustrent un exemple de dispositif 1 d'ajustement par translation de la position d'un composant optique D d'un équipement optique, par exemple d'un télescope embarqué dans un engin spatial, selon un axe central X et relativement à un bâti 100.

Le composant optique D peut être un capteur, une lentille, un miroir ou un prisme, de préférence un capteur. Le dispositif 1 est configuré pour permettre d'ajuster la position du composant optique D en translation de manière par exemple à ajuster la focale de l'équipement optique, notamment du télescope, non visible sur cette figure, sans avoir à déplacer l'ensemble de la partie optique de celui-ci par exemple. Le dispositif 1 qui va être maintenant décrit en regard des figures permet d'obtenir une translation dite pure, c'est-à-dire une translation avec un déplacement latéral parasite inférieur à 1 µm, soit environ 1/2000 de la course totale, un déplacement angulaire inférieur à 500 µrad, c'est-à-dire plus ou moins 250 µrad par axe (X, Y) et éventuellement un cadencement (axe Z) inférieur à plus ou moins 10 µm.

Le bâti 100 peut former l'engin spatial dans lequel l'équipement optique est embarqué.

Le dispositif 1 comporte un support 2 sur lequel est disposé le composant optique D et mobile en translation relativement au bâti 100. Le support 2 est en position centrale, entouré du bâti 100. Le dispositif 1 comporte de plus un actionneur 3 solidaire du bâti 100 et configuré pour déplacer le support 2 en translation, relativement au bâti 100, selon l'axe central X, entre une position basse et une position haute. Le déplacement du support 2 entraîne nécessairement le déplacement du composant optique D que le support 2 porte. L'actionneur 3 est dans cet exemple disposé sous le support 2 et soulève ce dernier vers le haut.

Le dispositif 1 comporte encore un système de guidage latéral 4 du support 2. Cela permet de guider le support 2, et donc le composant optique D, en translation pure lors d'une translation du support 2 entraînée par l'actionneur 3. Le système de guidage latéral 4 comporte deux ensembles de guidage 5 disposés latéralement respectivement de part et d'autre du support 2 et configurés pour guider, selon l'axe central X, le support 2 lors de son déplacement en translation.

Chaque ensemble de guidage 5 comporte un cadre 6 et au moins deux étages 7a, 7b disposés à des hauteurs différentes selon l'axe central X. Chaque étage 7a, 7b comporte au moins trois éléments flexibles 8a, 8b dont au moins un élément flexible central 8a et deux éléments flexibles latéraux 8b, dans cet exemple exactement trois éléments flexibles, dont un élément flexible central 8a et deux éléments flexibles latéraux 8b. Le système de guidage latéral 4 comporte ainsi dans cet exemple douze éléments flexibles, c'est-à-dire trois éléments flexibles x quatre étages, donc trois éléments flexibles x deux étages pour chaque ensemble de guidage 5.

Les éléments flexibles latéraux 8b et les éléments flexibles centraux 8a sont fixés aux cadres 6 et dans chaque étage 7a, 7b, l'ensemble des éléments flexibles latéraux 8b et l'élément flexible central 8a sont fixés l'un au bâti 100 et l'autre au support 2. Dans l'exemple illustré sur les figures 1 et 2, les éléments flexibles latéraux 8b sont fixés d'une part au cadre 6 et d'autre part au bâti 100. L'élément flexible central 8a est quant à lui fixé d'une part au cadre 6 et d'autre part au support 2.

L'encombrement est réduit, étant compris dans un parallélépipède de dimensions 180 mm x 180 mm x 300 mm.

Comme on peut le voir sur la figure 1 qui est schématique, les éléments flexibles 8a, 8b sont disposés, dans une position médiane, intermédiaire entre la position basse et la position haute, parallèlement entre eux et à une même hauteur au sein d'un même étage 7a ou 7b, pour chaque ensemble de guidage 5.

Comme visible sur les figures 1 et 2, les éléments flexibles latéraux 8b comportent des extrémités 9a et 9b, chaque élément flexible latéral 8b étant fixé par son extrémité 9a au cadre 6 et par son extrémité 9b au bâti 100. De même, l'élément flexible central 8a comporte des extrémités 10a et 10b, l'élément flexible central 8a étant fixé par son extrémité 10a au cadre 6 et par son extrémité 10b au support 2.

Comme on peut le voir sur la figure 2, les éléments flexibles 8a et 8b présentent des formes rectangulaires et sont disposés parallèlement entre eux, les bords de deux éléments flexibles adjacents étant séparés entre eux d'une distance d constante, par exemple inférieure ou égale à 10 mm, notamment inférieure ou égale à 5 mm. Les deux éléments flexibles latéraux 8b entourent latéralement l'élément flexible central 8a au sein d'un même étage illustré sur la figure 2. S'il y avait deux éléments flexibles centraux 8a, ceux-ci seraient entourés latéralement des éléments flexibles latéraux 8b. Dans cet exemple la largeur de chaque élément flexible central 8a est supérieure à la largeur de chaque élément flexible latéral 8b. Leurs longueurs respectives sont en revanche égales entre elles.

Comme on peut le voir sur les figures 1 et 2, les cadres 6 sont disposés parallèlement à l'axe central X, c'est-à-dire parallèles à un plan médian P incluant l'axe central X, comme illustré sur la figure 2, et parallèles entre eux. Plus précisément, les deux ensembles de guidage 5 sont disposés de manière symétrique entre eux par rapport au plan médian P passant par l'axe central X. Les cadres 6 sont disposés à l'extérieur, de part et d'autre d'un bloc central formé par le bâti 100 et le support 2 ainsi que, partiellement, l'actionneur 3.

La partie du bâti 100 qui est reliée à un élément flexible, latéral 8b ou central 8a, dans cet exemple latéral 8b, peut être disposée à côté de la partie du support 2 qui est reliée à un élément flexible, central 8a ou latéral 8b, dans cet exemple central 8a. Ainsi, dans chaque ensemble de guidage 5, le cadre 6 se trouve à distance de cette partie du bâti 100 et de cette partie du support 2, étant séparé de celles-ci par les éléments flexibles 8a et 8b.

Comme visible dans l'exemple illustré sur la figure 1, l'actionneur 3 comporte un organe moteur 11 ainsi qu'un arbre 12 configuré pour être entraîné en rotation par l'organe moteur 11 et présentant une excentrique 13. Toujours dans l'exemple illustré, l'actionneur 3 comporte une bielle 14 comportant une extrémité supérieure 15 articulée avec le support 2 et une extrémité inférieure 19 articulée avec l'excentrique 13.

Le dispositif 1 comporte dans cet exemple et comme visible sur la figure 1, une liaison pivot 18, notamment un roulement, entre une extrémité inférieure 19 de la bielle 14 et l'excentrique 13 et une liaison pivot 20, notamment un roulement, entre l'arbre 12 et le bâti 100. Une liaison pivot peut encore être prévue entre le support 2 et l'extrémité supérieure 15 de la bielle 14.

Le mouvement rotatif généré dans l'arbre 12 par l'organe moteur 11 est transformé, par l'intermédiaire de l'excentrique 13 et de la bielle 14, en mouvement de translation de bas en haut et de haut en bas sur la figure 1, qui entraîne ainsi en translation le support 2 et donc le composant optique D. Le système de guidage latéral 4 est configuré pour guider le support 2 lors de cette translation pour empêcher tout déplacement latéral ou radial du support 2.

Ainsi, la transmission par bielle 14 et excentrique 13 permet de transformer la rotation en translation. De plus, la transmission par bielle 14 et excentrique 13 permet d'offrir une position irréversible lorsque l'on est près du point mort, en fin de course, ce qui permet d'éviter d'ajouter un système de gerbage au lancement.

L'actionneur 3 apporte le couple nécessaire à la création du mouvement du composant optique D. Il donne une vitesse suffisante à ce dernier.

L'architecture du dispositif 1, dans un encombrement réduit, permet d'offrir un bon compromis entre le dimensionnement des éléments flexibles et le besoin du couple moteur.

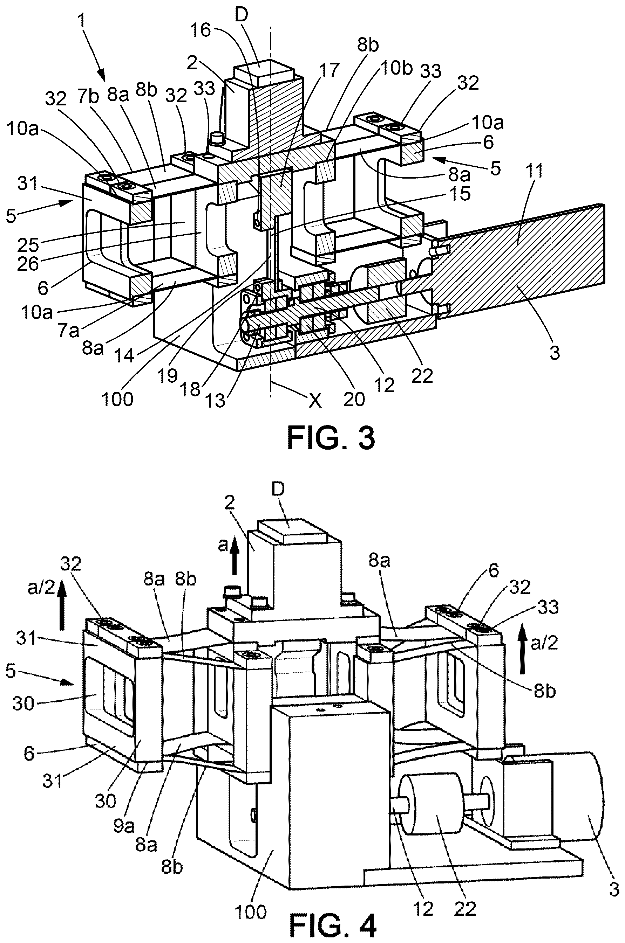

Comme visible sur les figures 3 et 4, les éléments flexibles, centraux 8a dans cet exemple, qui sont fixés au support 2 ont, lors de la translation du support 2 d'une distance a, leur extrémité 10b qui est fixée au support 2 qui est également translatée de la même distance a. Par contre, le bâti 100 restant immobile lors de la translation du support 2, les éléments flexibles, latéraux 8b dans cet exemple, ont leur extrémité 9b, qui est fixée au bâti 100, qui reste également immobile. Cela crée un déplacement en translation des cadres 6, dans le même sens que le support 2, dans cet exemple d'une distance a/2. Les extrémités 9a et 10a, respectivement des éléments flexibles centraux 8a et latéraux 8b, qui sont fixées aux cadres 6 sont également déplacées en translation de cette distance a/2. Ainsi, les éléments flexibles 8a et 8b qui étaient dans une configuration plane dans la position médiane du support 2, comme illustré sur les figures 1 et 3, se retrouvent dans une configuration déformée comme illustré sur la figure 4 dans une position différente de la position médiane, par exemple dans la position haute du support 2. On obtient, dans la configuration déformée, une différence de hauteur, projetée sur l'axe central X, entre les deux extrémités de chaque élément flexible 8a ou 8b qui est égale à la moitié de la hauteur de déplacement du support 2.

Ainsi, les cadres 6 et les éléments flexibles 8a, 8b sont configurés de telle sorte que, lorsque le support 2 est déplacé en translation d'une distance a, chaque cadre 6 est déplacé, dans la même direction, d'une distance a/2.

Chaque cadre 6 présente une forme générale rectangulaire ou carrée, avec deux montants longitudinaux 30 parallèles entre eux et deux montants transversaux 31 parallèles entre eux, les montants longitudinaux 30 et transversaux 31 étant disposés perpendiculairement deux à deux à leurs extrémités respectives, comme visible notamment sur la figure 4, pour former le cadre 6.

Dans l'exemple illustré sur les figures 3 et 4, les éléments flexibles 8a, 8b sont des lames. Les éléments flexibles 8a, 8b, donc les lames, sont fixés aux cadres 6, au bâti 100 ou au support 2. Dans l'exemple illustré, les lames sont fabriquées à partir d'un feuillard, qui constitue une tôle mince métallique ou en matériau composite. On découpe le feuillard aux dimensions souhaitées pour former la lame.

Sur chaque cadre 6, les éléments flexibles 8a et 8b sous forme de lames sont pincés au niveau des montants transversaux 31 avec des brides 32 fixées à l'aide d'éléments de fixation 33, par exemple de vis, aux extrémités de chaque lame et ainsi fixées aux cadres, au bâti ou au support.

En variante, les lames peuvent être fabriquées par usinage dans la masse, auquel cas chaque lame et ses brides 32 constituent une seule pièce.

De même, les éléments flexibles latéraux 8b qui sont constitués par des lames dans cet exemple sont respectivement fixés, notamment par pinçage, au bâti 100 à leur autre extrémité, à l'aide de brides 32 et d'éléments de fixation 33, notamment de vis. Dans cet exemple, des éléments de fixation 33 permettent également de serrer le pinçage des extrémités 10b des éléments flexibles centraux 8a dans une fente du support 2, formée par deux parties superposées de celui-ci, comme visible sur la figure 3.

Chaque élément flexible 8a, 8b présente dans des exemples une épaisseur, comprise entre 0,1 et 0,6 mm, choisie, avec sa longueur, sa largeur et son matériau, notamment, pour permettre d'obtenir une raideur souhaitée dans un encombrement réduit.

La raideur de l'ensemble des éléments flexibles latéraux 8b est, dans cet exemple, égale à la raideur de l'ensemble des éléments flexibles centraux 8a. Ainsi lorsque, comme dans l'exemple illustré sur les figures 3 et 4, l'ensemble de guidage 5 comporte un élément flexible central 8a et deux éléments flexibles 8b entourant latéralement l'élément flexible central 8a, la raideur de l'élément flexible central 8a est égale à la raideur des deux éléments flexibles latéraux 8b.

Les éléments flexibles 8a, 8b comportent par exemple un acier, un titane, un cuivre ou un de leurs alliages.

Dans l'exemple illustré sur les figures 3 et 4, l'organe moteur 11 comprend un moteur pas à pas et un réducteur 22. Le double étage de guidage par éléments flexibles avec un cadre déporté permet de fournir une course importante tout en limitant l'effort nécessaire à la flexion des éléments flexibles. La stabilité ainsi apportée à la masse mobile ne se fait pas au détriment de l'actionneur : il est ainsi possible d'utiliser un réducteur - ou motoréducteur - de dimension raisonnable, avec peu de réduction, et donc une vitesse en sortie importante, et un couple en sortie limité.

La partie du bâti 100 qui est reliée à un élément flexible, latéral ou central, est dans l'exemple illustré disposée à côté de la partie du support 2 qui est reliée à un élément flexible, central ou latéral. Ainsi, dans chaque ensemble de guidage 5, le cadre 6 se trouve à distance de cette partie du bâti 100 et de cette partie du support 2, étant séparé de celles-ci par les éléments flexibles 8a et 8b.

Plus précisément, et comme visible notamment sur la figure 3, le bâti 100 comporte, pour chaque ensemble de guidage 5, deux séparateurs 25 séparant les étages 7a, 7b entre eux, et le support 2 présente également une portion de séparation 26 séparant les étages 7a, 7b entre eux. La portion de séparation 26 du support 2 est disposée entre les séparateurs 25 du bâti 100 et est apte à coulisser relativement au bâti 100, les séparateurs 25 du bâti 100 et la portion de séparation 26 du support 2 étant disposés parallèlement entre eux. Ainsi, lorsque le support 2 est déplacé en translation, la portion de séparation 26 coulisse relativement aux séparateurs 25 qui l'entourent.

Une distance maximale a de translation du support 2, obtenue notamment lorsque le moteur 11 entraîne en rotation l'arbre 12 d'un demi-tour, est par exemple comprise entre 1 mm et 10 mm, notamment entre 1 mm et 5 mm, étant notamment égale à 3 mm.

La masse mobile, incluant la masse du support 2 et la masse du composant mobile D, est par exemple comprise entre 0,3 kg et 2 kg, notamment entre 0,5 kg et 1,5 kg, notamment égale à environ 1 kg.

## Revendications

1. Dispositif (1) d'ajustement par translation de la position d'un composant optique (D) d'un équipement optique, notamment d'un télescope embarqué dans un engin spatial, selon un axe central (X) et relativement à un bâti (100), le dispositif (1) comportant :
a. un support (2) sur lequel est disposé le composant optique (D) mobile en translation relativement au bâti (100),
b. un actionneur (3) solidaire du bâti (100) et configuré pour déplacer le support (2) en translation, relativement au bâti (100), selon l'axe central (X), entre une position basse et une position haute,
c. un système de guidage latéral (4) du support (2) comportant deux ensembles de guidage (5) disposés latéralement respectivement de part et d'autre du support (2) et configurés pour guider, selon l'axe central (X), le support (2) lors de son déplacement en translation,
chaque ensemble de guidage (5) comportant un cadre (6) et au moins deux étages (7a, 7b) disposés à des hauteurs différentes selon l'axe central (X), chaque étage (7a ; 7b) comportant au moins trois éléments flexibles (8a, 8b) dont au moins un élément flexible central (8a) et deux éléments flexibles latéraux (8b),
lesdits éléments flexibles latéraux (8b) et lesdits éléments flexibles centraux (8a) étant fixés aux cadres et dans chaque étage, l'ensemble desdits éléments flexibles latéraux (8b) et ledit élément flexible central (8a) étant fixés l'un au bâti (100) et l'autre au support (2).

2. Dispositif (1) selon la revendication 1, dans lequel les éléments flexibles (8a, 8b) sont disposés, dans la position médiane, parallèlement entre eux et à une même hauteur au sein d'un même étage (7a ; 7b).

3. Dispositif (1) selon la revendication 1 ou 2, chaque élément flexible (8a, 8b) présentant deux extrémités (9a, 9b ; 10a, 10b), chaque élément flexible, latéral ou central, étant fixé au cadre (6) par une de ses extrémités (9a ; 10a) et par l'autre extrémité (9b ; 10b) au bâti (100) ou au support (2).

4. Dispositif selon l'une quelconque des revendications précédentes, dans lequel les éléments flexibles (8a, 8b) sont des lames, dans lequel les lames sont fixées par pinçage aux cadres (6), au bâti (100) ou au support (2).

5. Dispositif (1) selon la revendication 4, dans lequel les lames sont disposées parallèlement entre elles, la distance entre deux lames adjacentes étant inférieure ou égale à 10 mm, notamment inférieure ou égale à 5 mm.

6. Dispositif (1) selon l'une quelconque des revendications précédentes, dans lequel la raideur de l'ensemble des éléments flexibles latéraux (8b) est égale à la raideur de l'ensemble des éléments flexibles centraux.

7. Dispositif (1) selon l'une quelconque des revendications précédentes, dans lequel les éléments flexibles (8 ; 8a, 8b) comportent au moins un matériau choisi dans le groupe constitué par un acier, un titane, un cuivre et leurs alliages.

8. Dispositif (1) selon l'une quelconque des revendications précédentes, dans lequel les cadres (6) sont disposés parallèlement à l'axe central (X) et parallèles entre eux.

9. Dispositif selon l'une quelconque des revendications précédentes, dans lequel les deux ensembles de guidage (5) sont disposés de manière symétrique entre eux par rapport à un plan médian passant par l'axe central (X).

10. Dispositif (1) selon l'une quelconque des revendications précédentes, dans lequel les cadres (6) et les éléments flexibles (8a, 8b) sont configurés de telle sorte que, lorsque le support (2) est déplacé en translation d'une distance a, chaque cadre (6) est déplacé, dans la même direction, d'une distance a/2.

11. Dispositif (1) selon l'une quelconque des revendications précédentes, dans lequel l'actionneur (3) comporte un organe moteur (11) ainsi qu'un arbre (12) configuré pour être entraîné en rotation par l'organe moteur (11) et présentant une excentrique (13), l'actionneur (3) comportant une bielle (14) comportant une extrémité supérieure (15) articulée avec le support et une extrémité inférieure articulée avec l'excentrique (13).

12. Dispositif (1) selon l'une quelconque des revendications précédentes, dans lequel les éléments flexibles latéraux (8b) sont fixés par une extrémité (9a) au cadre (6) et par l'autre extrémité (9b) au bâti (100) et dans lequel chaque étage (7a, 7b) comporte un élément flexible central (8a), lequel est fixé par une extrémité (10a) au cadre (6) et par l'autre extrémité (10b) au support (2).

13. Dispositif (1) selon l'une des revendications précédentes, dans lequel le bâti (100) comporte, pour chaque ensemble de guidage (5), deux séparateurs (25) séparant les étages (7a, 7b) entre eux, et le support (2) présente également une portion de séparation (26) séparant les étages (7a ; 7b) entre eux, la portion de séparation étant disposée entre lesdits séparateurs (25) du bâti (100) et étant apte à coulisser relativement au bâti (100), les séparateurs (25) du bâti (100) et la portion de séparation (26) du support (2) étant disposés parallèlement entre eux.

14. Dispositif (1) selon l'une quelconque des revendications précédentes, dans lequel une distance maximale (x) de translation du support (2), obtenue notamment lorsque le moteur (11) entraîne en rotation l'arbre (12) d'un demi-tour, est comprise entre 1 mm et 10 mm, notamment entre 1 mm et 5 mm, étant notamment égale à 3 mm.

15. Dispositif (1) selon l'une quelconque des revendications précédentes, dans lequel la masse mobile, incluant la masse du support (2) et celle du composant mobile (D), est comprise entre 0,3 kg et 2 kg, notamment entre 0,5 kg et 1,5 kg, notamment égale à environ 1 kg.

## Patentansprüche

1. Vorrichtung (1) zur translatorischen Einstellung der Position eines optischen Bauteils (D) einer optischen Anlage, insbesondere eines in einem Raumfahrzeug eingebauten Teleskops, entlang einer Mittelachse (X) und relativ zu einem Rahmen (100), wobei die Vorrichtung (1) umfasst:
a. einen Träger (2), auf dem das relativ zum Rahmen (100) translatorisch bewegliche optische Bauteil (D) angeordnet ist,
b. einen Aktuator (3), der mit dem Rahmen (100) verbunden ist und dazu ausgebildet ist, den Träger (2) relativ zum Rahmen (100) entlang der Mittelachse (X) zwischen einer unteren und einer oberen Position zu verschieben,
c. ein seitliches Führungssystem (4) des Trägers (2), das zwei Führungsbaugruppen (5) umfasst, die seitlich jeweils auf beiden Seiten des Trägers (2) angeordnet sind und dazu ausgebildet sind, den Träger (2) bei seiner translatorischen Bewegung entlang der Mittelachse (X) zu führen,
wobei jede Führungsbaugruppe (5) einen Rahmen (6) und wenigstens zwei Etagen (7a, 7b) umfasst, die in unterschiedlichen Höhen entlang der Mittelachse (X) angeordnet sind, wobei jede Etage (7a; 7b) wenigstens drei flexible Elemente (8a, 8b) umfasst, darunter wenigstens ein zentrales flexibles Element (8a) und zwei seitliche flexible Elemente (8b),
wobei die seitlichen flexiblen Elemente (8b) und die zentralen flexiblen Elemente (8a) an den Rahmen befestigt sind und wobei in jeder Etage die Gesamtheit der seitlichen flexiblen Elemente (8b) und das zentrale flexible Element (8a) jeweils am Gestell (100) und am Träger (2) befestigt sind.

2. Vorrichtung (1) nach Anspruch 1, wobei die flexiblen Elemente (8a, 8b) in der mittleren Position parallel zueinander und auf gleicher Höhe innerhalb einer gleichen Etage (7a; 7b) angeordnet sind.

3. Vorrichtung (1) nach Anspruch 1 oder 2, wobei jedes flexible Element (8a, 8b) zwei Enden (9a, 9b; 10a, 10b) aufweist, wobei jedes flexible Element seitlich oder zentral mit einem seiner Enden (9a; 10a) am Rahmen (6) und mit dem anderen Ende (9b; 10b) am Gestell (100) oder an dem Träger (2) befestigt ist.

4. Vorrichtung nach einem der vorstehenden Ansprüche, wobei die flexiblen Elemente (8a, 8b) Lamellen sind, wobei die Lamellen durch Einklemmen an den Rahmen (6), am Gestell (100) oder an dem Träger (2) befestigt sind.

5. Vorrichtung (1) nach Anspruch 4, wobei die Lamellen parallel zueinander angeordnet sind, wobei der Abstand zwischen zwei benachbarten Lamellen kleiner oder gleich 10 mm ist, insbesondere kleiner oder gleich 5 mm.

6. Vorrichtung (1) nach einem der vorstehenden Ansprüche, wobei die Steifigkeit der Gesamtheit der seitlichen flexiblen Elemente (8b) gleich der Steifigkeit der Gesamtheit der mittleren flexiblen Elemente ist.

7. Vorrichtung (1) nach einem der vorstehenden Ansprüche, wobei die flexiblen Elemente (8; 8a, 8b) wenigstens ein Material umfassen, gewählt aus der Gruppe, umfassend Stahl, Titan, Kupfer und deren Legierungen.

8. Vorrichtung (1) nach einem der vorstehenden Ansprüche, wobei die Rahmen (6) parallel zur Mittelachse (X) und parallel zueinander angeordnet sind.

9. Vorrichtung nach einem der vorstehenden Ansprüche, wobei die beiden Führungsbaugruppen (5) in Bezug auf eine durch die Mittelachse (X) verlaufende Mittelebene symmetrisch zueinander angeordnet sind.

10. Vorrichtung (1) nach einem der vorstehenden Ansprüche, wobei die Rahmen (6) und die flexiblen Elemente (8a, 8b) so ausgebildet sind, dass, wenn der Träger (2) um einen Abstand a verschoben ist, jeder Rahmen (6) in derselben Richtung um einen Abstand a/2 verschoben ist.

11. Vorrichtung (1) nach einem der vorstehenden Ansprüche, wobei der Aktuator (3) ein Antriebselement (11) sowie eine Welle (12) umfasst, die dazu ausgebildet ist, durch das Antriebselement (11) in Drehung versetzt zu werden, und einen Exzenter (13) aufweist, wobei der Aktuator (3) eine Pleuelstange (14) aufweist, die ein oberes Ende (15) aufweist, das mit dem Träger gelenkig verbunden ist, und ein unteres Ende aufweist, das mit dem Exzenter (13) gelenkig verbunden ist.

12. Vorrichtung (1) nach einem der vorstehenden Ansprüche, wobei die seitlichen flexiblen Elemente (8b) mit einem Ende (9a) am Rahmen (6) und mit dem anderen Ende (9b) am Gestell (100) befestigt sind und wobei jede Etage (7a, 7b) ein zentrales flexibles Element (8a) aufweist, das mit einem Ende (10a) am Rahmen (6) und mit dem anderen Ende (10b) am Träger (2) befestigt ist.

13. Vorrichtung (1) nach einem der vorstehenden Ansprüche, wobei der Rahmen (100) für jede Führungsbaugruppe (5) zwei Trennelemente (25) aufweist, die die Etagen (7a, 7b) voneinander trennen, und der Träger (2) ebenfalls einen Trennabschnitt (26) aufweist, der die Etagen (7a; 7b) voneinander trennt, wobei der Trennabschnitt zwischen den genannten Trennvorrichtungen (25) des Rahmens (100) angeordnet ist und relativ zum Rahmen (100) verschiebbar ist, wobei die Trennvorrichtungen (25) des Rahmens (100) und der Trennabschnitt (26) des Trägers (2) parallel zueinander angeordnet sind.

14. Vorrichtung (1) nach einem der vorstehenden Ansprüche, wobei ein maximaler Verschiebungsweg (x) des Trägers (2), der insbesondere dann erreicht wird, wenn der Motor (11) die Welle (12) um eine halbe Umdrehung dreht, zwischen 1 mm und 10 mm, insbesondere zwischen 1 mm und 5 mm, beträgt, wobei er insbesondere 3 mm beträgt.

15. Vorrichtung (1) nach einem der vorstehenden Ansprüche, wobei die bewegliche Masse, einschließlich der Masse des Trägers (2) und der des beweglichen Bauteils (D), zwischen 0,3 kg und 2 kg, insbesondere zwischen 0,5 kg und 1,5 kg, insbesondere etwa 1 kg beträgt.

## Claims

1. Device (1) for translationally adjusting the position of an optical component (D) of an optical equipment item, in particular of a telescope mounted on-board a spacecraft, along a centre axis (X) and relative to a stand (100), the device (1) comprising:
a. a support (2) on which the optical component (D) movable in translation relative to the stand (100) is disposed,
b. an actuator (3) secured to the stand (100) and configured to move the support (2) in translation, relative to the stand (100), along the centre axis (X) between a low position and a high position,
c. a lateral guide system (4) of the support (2) comprising two guide assemblies (5) respectively disposed laterally on either side of the support (2) and configured to guide the support (2), along the centre axis (X), while moving it in translation,
each guide assembly (5) comprising a frame (6) and at least two stages (7a, 7b) arranged at different heights along the centre axis (X), each stage (7a; 7b) comprising at least three flexible elements (8a, 8b) including at least one central flexible element (8a) and two lateral flexible elements (8b),
said lateral flexible elements (8b) and said central flexible elements (8a) being fastened to the frames and in each stage, all said lateral flexible elements (8b) and said central flexible element (8a) being fastened one to the stand (100) and the other to the support (2).

2. Device (1) according to claim 1, wherein the flexible elements (8a, 8b) are disposed, in the central position, parallel to each other and at the same height within the same stage (7a; 7b).

3. Device (1) according to claim 1 or 2, each flexible element (8a, 8b) having two ends (9a, 9b; 10a, 10b), each lateral or central flexible element being attached to the frame (6) by one of its ends (9a; 10a) and by the other end (9b; 10b) to the stand (100) or to the support (2).

4. Device according to any one of the preceding claims, wherein the flexible elements (8a, 8b) are slats, wherein the slats are clamped to the frames (6), the stand (100) or the support (2).

5. Device (1) according to claim 4, wherein the slats are disposed parallel to each other, the distance between two adjacent slats being less than or equal to 10 mm, in particular less than or equal to 5 mm.

6. Device (1) according to any one of the preceding claims, wherein the stiffness of all of the lateral flexible elements (8b) is equal to the stiffness of all of the central flexible elements.

7. Device (1) according to any one of the preceding claims, wherein the flexible elements (8; 8a, 8b) comprise at least one material selected from the group constituted by steel, titanium, copper and alloys thereof.

8. Device (1) according to any one of the preceding claims, wherein the frames (6) are disposed parallel to the centre axis. (X) and parallel to each other.

9. Device according to any one of the preceding claims, wherein the two guide assemblies (5) are arranged symmetrically with respect to one another with respect to a median plane passing through the centre axis (X).

10. Device (1) according to any one of the preceding claims, wherein the frames (6) and the flexible elements (8a, 8b) are configured such that, when the support (2) is moved in translation by a distance a, each frame (6) is moved, in the same direction, by a distance a/2.

11. Device (1) according to any one of the preceding claims, wherein the actuator (3) comprises a motor member (11) and a shaft (12) which is configured to be driven in rotation by the motor member (11) and has an eccentric (13), the actuator (3) comprising a connecting rod (14) comprising an upper end (15) articulated to the support and a lower end articulated to the eccentric (13).

12. Device (1) according to any one of the preceding claims, wherein the lateral flexible elements (8b) are attached by one end (9a) to the frame (6) and by the other end (9b) to the stand (100) and wherein each stage (7a, 7b) comprises a central flexible element (8a), which is attached by one end (10a) to the frame (6) and by the other end (10b) to the support (2).

13. Device (1) according to any one of the preceding claims, wherein the stand (100) comprises, for each guide assembly (5), two separators (25) separating the stages (7a, 7b) from each other, and the support (2) also has a separation portion (26) separating the stages (7a; 7b) from each other, the separation portion being disposed between said separators (25) of the stand (100) and being able to slide relative to the stand (100), the separators (25) of the stand (100) and the separation portion (26) of the support (2) being disposed parallel to each other.

14. Device (1) according to any one of the preceding claims, wherein a maximum translation distance (x) of the support (2), obtained in particular when the motor (11) rotates the shaft (12) by half a turn, is between 1 mm and 10 mm, in particular between 1 mm and 5 mm, being in particular equal to 3 mm.

15. Device (1) according to any one of the preceding claims, wherein the movable mass, including the mass of the support (2) and that of the movable component (D), is between 0.3 kg and 2 kg, in particular between 0.5 kg and 1.5 kg, in particular equal to about 1 kg.
